# FASCICULE DE BREVET EUROPEEN

(11) **EP 3 609 787 B1**
(45) Date de publication et mention de la délivrance du brevet: **13.07.2022**
(21) Numéro de dépôt: 18735635.7
(22) Date de dépôt: 18.05.2018
(51) Int. Cl.: B64D 27/24, F02C 7/32, F02C 7/36, B64D 27/02

(54) **ARCHITECTURE PROPULSIVE HYBRIDE D'AÉRONEF COMPRENANT UN MOTEUR AVEC DEUX MACHINE ÉLECTRIQUES REVERSIBLES MONTÉES SUR DEUX ARBRES**
HYBRIDE ANTRIEBSARCHITEKTUR FÜR EIN FLUGZEUG MIT EINEM MOTOR MIT ZWEI REVERSIBLEN ELEKTRISCHEN MASCHINEN, DIE AUF ZWEI WELLEN MONTIERT SIND
HYBRID PROPULSION ARCHITECTURE FOR AN AIRCRAFT COMPRISING A MOTOR WITH TWO REVERSIBLE ELECTRIC MACHINES MOUNTED ON TWO SHAFTS

(30) Priorité: 19.05.2017 FR 1754493
(43) Date de publication de la demande: 19.02.2020
(73) Titulaire: Safran, 75015 Paris (FR)
(72) Inventeur: JALJAL, Nawal, 77550 Moissy-Cramayel (FR); DESARNAUD, Fabien, 77550 Moissy-Cramayel (FR)
(74) Mandataire: Brevalex
(86) Numéro de dépôt international: PCT/FR2018/051202
(87) Numéro de publication internationale: WO 2018/211227

(56) Documents cités:
- EP-A2- 1 785 614
- EP-A2- 2 192 291
- WO-A1-95/02120
- CA-A1- 2 903 986
- US-A1- 2011 154 827
- US-A1- 2015 274 306

## Description

Le sujet de l'invention est une architecture propulsive hybride d'aéronef comprenant un moteur couplé avec une machine électrique réversible sur ses arbres.

Les architectures propulsives hybrides d'aéronefs modernes comportent des moteurs qui sont associés à des machines électriques reliées par un réseau de distribution électrique à des stockeurs électriques ou d'autres appareils de stockage énergétique. Les moteurs peuvent fournir, outre l'énergie nécessaire à la propulsion, de l'énergie électrique exploitée ou stockée ailleurs dans l'aéronef ; les machines électriques peuvent aussi, réciproquement, fournir une énergie d'assistance aux moteurs, utile pour certaines phases de la mission au sol et en vol.

Mais comme les turbomachines usuelles comprennent un arbre basse pression BP et un arbre haute pression HP tournant à des vitesses différentes, et que la transmission de puissance réversible peut avantageusement concerner l'un ou l'autre de ces arbres, on est amené à associer chacune d'elles à une machine électrique particulière, ce qui peut conduire à un agencement lourd et qui se révélera compliqué à commander de façon fiable.

L'art antérieur identifié comprend un grand nombre d'architectures de propulsion hybride où des arbres et des rotors de moteurs d'aéronefs sont associés à des machines électriques réversibles : on citera d'abord US 2011/154827 A1, sur lequel le préambule de la revendication indépendante est fondé et qui décrit un dispositif où deux arbres concentriques de moteur d'aéronef sont reliés à des machines électriques réversibles par des transmissions à engrenages ; et EP 2 192 291 A2, qui décrit une machine électrique unique reliée par des embrayages unidirectionnels respectifs à deux arbres du moteur (ici l'arbre basse pression et un arbre associé à une turbine d'extrémité du moteur et affecté à l'entraînement d'hélices), où les embrayages sont disposés de façon à permettre un mode de démarrage, dans lequel la machine électrique fonctionne en moteur et entraîne l'arbre basse pression initialement au repos, et un mode normal succédant au démarrage où l'arbre d'entraînement des hélices a atteint une vitesse suffisante pour accoupler l'autre embrayage unidirectionnel, faire travailler la machine en générateur d'électricité, et désaccoupler le premier embrayage unissant la machine à l'arbre basse pression. L'architecture de l'invention utilise aussi, entre autres, une machine électrique réversible accouplée à deux arbres indépendants et coaxiaux d'un moteur d'aéronef par des embrayages unidirectionnels ; mais elle se distingue de ce deuxième document par le fonctionnement des embrayages passifs unidirectionnels qu'elle utilise et par le mode de commande des machines électriques, si bien qu'elle permet des modes de fonctionnement complètement différents, notamment du transfert de puissance d'un des arbres à l'autre.

D'autres documents pouvant mériter l'attention sont WO 95/02120 A1, qui décrit trois machines électriques réversibles respectivement associées à l'arbre basse pression, l'arbre haute pression et un arbre de soufflante par des transmissions dont certaines comprennent des embrayages, et qui interagissent pour transférer de la puissance d'un des arbres à un autre, ce qui nécessite toutefois certainement un dispositif de commande compliqué, notamment pour les embrayages ; US 2013/0038057 A1 qui décrit une machine électrique réversible pouvant être reliée soit un arbre porte-hélice, soit à un arbre basse pression par des embrayages respectifs ; EP1731735 A2, un dispositif où un arbre haute pression est encore relié à une machine électrique réversible et aussi relié, de même que l'arbre basse pression, à un ensemble comprenant une pompe hydraulique et un moteur hydraulique, ainsi qu'un embrayage, de manière à transférer à volonté de la puissance de l'arbre basse pression à l'arbre haute pression, ce dispositif étant néanmoins irréversible pour le sens de transmission de puissance, et différent d'une machine électrique pour la transformation réversible de nature de l'énergie ; EP 1785614 A2 qui décrit, dans un moteur comprenant deux arbres à sens opposés de rotation, un dispositif à moteur électrique pour entraîner séparément un arbre porteur d'une soufflante pour un mouvement de taxiage ; et US 5867979 A, qui décrit encore un dispositif à trois arbres associés chacun à une machine électrique réversible respective, pour permettre des transferts d'énergie d'un arbre à un autre.

De telles architectures propulsives permettent donc une multitude de modes de fonctionnement améliorés de moteurs d'aéronefs à deux ou trois arbres par l'intermédiaire de machines électriques réversibles permettant de prélever ou de fournir de la puissance aux arbres. La commande des différents modes nécessaire à un fonctionnement universel du moteur, comprenant de nombreux modes différents, implique toutefois d'ajouter des embrayages sur les transmissions reliant les machines électriques aux arbres ou les machines entre elles, avec la conséquence d'alourdir substantiellement le dispositif et un risque de manque de fiabilité dû à la présence du système de commande.

L'objectif à la source de l'invention est donc de rechercher un nombre important de modes de fonctionnements hybrides et variés de moteurs d'aéronefs, en faisant collaborer des machines électriques réversibles associées à deux arbres coaxiaux du moteur, mais en utilisant un dispositif aussi simple et léger que possible et parfaitement fiable en ce qui concerne la commande des embrayages. Les principaux moyens utilisés pour cela comprennent l'emploi généralisé d'embrayages unidirectionnels pour les transmissions, la liaison des rotors de machines électriques à chacun des deux arbres, et l'exploitation de la possibilité de commander les machines électriques suivant les quatre quadrants, c'est-à-dire en mode moteur et en mode générateur dans deux sens de rotation.

Sous une forme générale, l'invention est relative à une architecture d'un système propulsif hybride d'aéronef, comprenant un moteur comprenant au moins deux arbres tournant indépendamment l'un de l'autre, deux machines électriques réversibles reliées à un réseau de distribution, et un système de commande des machines électriques, caractérisée en ce que :
- un rotor de chaque machine électrique est relié à chacun des arbres du moteur par une transmission respective, les arbres ayant soit des sens de rotation inverses, soit des sens de rotation identiques, une des transmissions comportant alors une inversion de sens de rotation,
- chacune des transmissions comprend un accouplement débrayable, les accouplements débrayables sont des embrayages unidirectionnels passifs, et les embrayages unidirectionnels de chaque machine électrique mettent le rotor de la machine électrique en accouplement avec les arbres pour des sens opposés de rotation du rotor de la machine électrique, et en ce que :

- le système de commande des machines électriques permet :
   - une commande des machines électriques en mode moteur et en mode générateur dans les deux sens de rotation de leur rotor,
   - un entraînement d'au moins un des arbres par les deux machines électriques, et aussi une génération d'électricité à partir d'un des deux arbres par la première machine électrique, simultanément à un entraînement du second des deux arbres par la seconde machine électrique.

De plus, selon un aspect important de l'invention permettant de maintenir un système à la fois léger et fiable, les accouplements débrayables sont des embrayages unidirectionnels et notamment des embrayages unidirectionnels passifs, comme des roues libres.

En exploitant le fonctionnement possible d'une machine électrique selon les quatre quadrants de fonctionnement, on obtient automatiquement une transmission par un seul des deux arbres selon le sens de rotation du rotor de la machine si les embrayages unidirectionnels débrayent pour des sens opposés de rotation du rotor, puisque l'accouplement de l'une des transmissions implique le désaccouplement de l'autre. Aucun dommage par accident de fonctionnement n'est donc à craindre. Ce résultat est immédiatement obtenu avec des arbres du moteur ne tournant pas dans le même sens de rotation, comme des arbres contrarotatifs. Dans le cas contraire, il faudra rajouter un inverseur de rotation, tel qu'un engrenage ou tout dispositif usuel, à l'une des transmissions. Comme les embrayages unidirectionnels sont des dispositifs passifs, aucun dispositif de commande des embrayages n'est nécessaire.

Comme les réalisations de l'invention impliquent une paire de machines électriques par moteur, elles présentent l'intérêt d'autoriser des modes de fonctionnement originaux, consistant notamment en des transferts de puissance d'un arbre à l'autre, un prélèvement sur l'une d'entre elles par une première des machines électriques coïncidant avec une fourniture de puissance à l'autre arbre par l'autre machine électrique.

D'autres modes de fonctionnement de l'agencement de l'invention sont possibles, et leurs avantages et circonstances d'emploi seront détaillés plus loin. Selon certains perfectionnements qu'on peut apporter à la conception générale de l'invention, le système de commande permet une génération d'électricité à partir d'un des arbres par une ou les deux machines électriques ; les transmissions comprennent des rapports de réduction de vitesse de rotation inégaux entre le rotor d'au moins une des machines et les arbres du moteur ; les machines électriques de tous les moteurs sont reliées à un dispositif de fourniture d'énergie.

Les différentes réalisations de l'invention, comprenant deux machines électriques reliées aux deux arbres du moteur, offrent donc divers avantages. Il devient possible d'ajuster avec une grande liberté les prélèvements de puissance mécanique ou au contraire les fournitures de puissance supplémentaire au moteur de manière beaucoup plus adaptée aux différentes situations rencontrées pendant toute la mission en vol et au sol, avec la perspective d'augmenter les performances du moteur à différents régimes, ou au contraire de prélever plus de puissance mécanique, sans inconvénient pour les performances globales du moteur et son opérabilité. On mentionnera en particulier des possibilités d'améliorer les performances transitoires, ou d'assister le moteur lors des phases de démarrage au sol et en vol. Une autre conséquence favorable aux performances globales de l'aéronef sera une plus grande liberté dans le dimensionnement de la turbomachine, en considérant qu'on disposera toujours, de façon sûre, d'un supplément de puissance originaire d'un autre dispositif de fourniture d'énergie, qu'il sera possible d'affecter grâce au mode moteur des machines électriques à l'arbre qui en aura besoin. Le couplage indépendant des machines électriques sur les deux arbres permet par ailleurs des modes de fonctionnement innovants pour les aéronefs modernes avec la mise en rotation électrique ou l'assistance électrique par accélération ou freinage des arbres BP et/ou HP, moteur éteint ou en fonctionnement. La fourniture de la puissance électrique aux machines électriques d'un moteur pourra provenir d'un autre moteur ou d'un stockeur d'énergie, prévu pour cette fonction ou associé à un turbogénérateur par exemple.

L'architecture caractéristique de l'invention est par ailleurs simple et fiable et légère grâce au choix d'accouplements unidirectionnels qui ne nécessitent pas de moyen de commande.

Et l'invention peut être mise en œuvre sur chacun des moteurs d'un même aéronef, avec un dispositif de fourniture d'énergie commun aux différentes machines électriques, apte aussi à alimenter en puissance électrique les équipements et les servitudes de l'aéronef.

Les différents aspects, caractéristiques et avantages de l'invention seront maintenant décrits en liaison aux figures suivantes, qui représentent de façon détaillée une réalisation purement illustrative de celle-ci :
- les figures 1 à 6 représentent une réalisation de l'invention et ses différents modes de fonctionnement, et
- la figure 7 représente l'agencement complet disposé sur un aéronef.

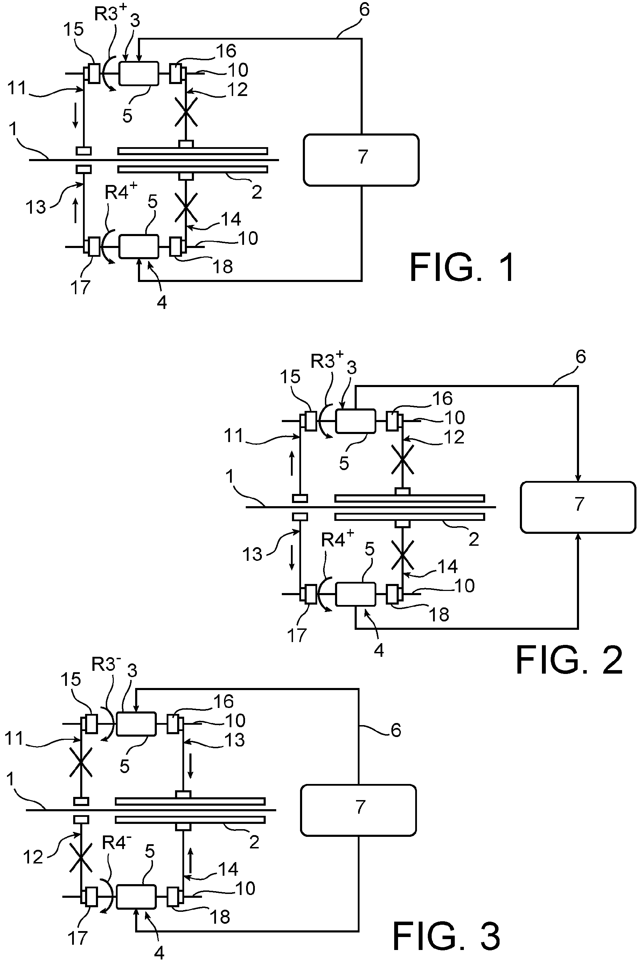

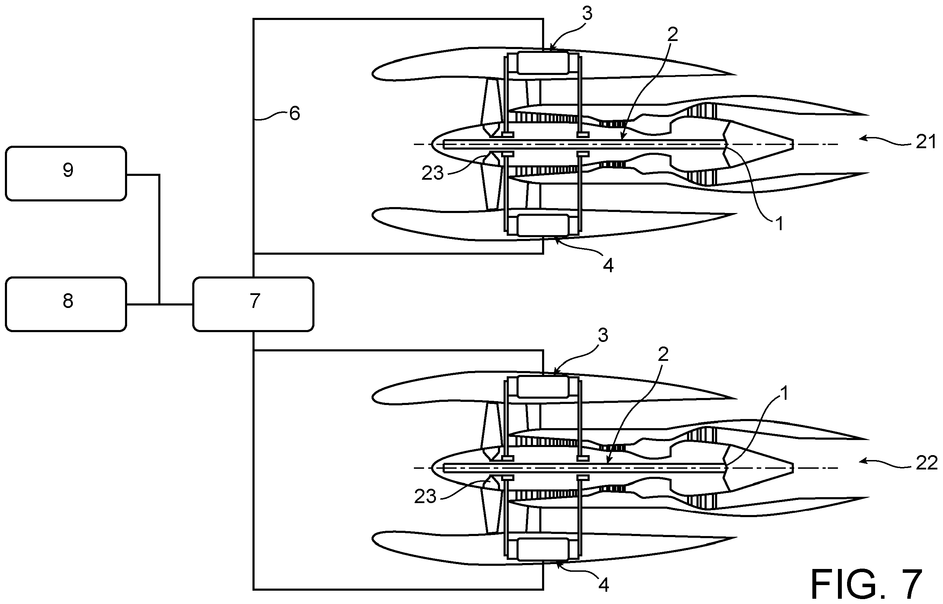

La description porte d'abord sur les figures 1 et 7. Un moteur d'aéronef comprend un arbre basse pression 1 et un arbre haute pression 2 coaxiaux et concentriques, ainsi qu'il est usuel. Il est associé à deux machines électriques 3 et 4 réversibles dont chacune comprend un stator 5 relié par des câbles électriques d'un réseau de distribution 6 à un système de commande 7, et par l'intermédiaire de celui-ci à une batterie ou un autre stockeur d'énergie 8 électrique. La figure 7 montre que le système de commande 7 est relié à toutes les machines électriques caractérisant l'invention, qui est ici appliquée avantageusement à chacun des deux moteurs 21 et 22 de l'aéronef. Le système de commande 7 interagit avec les électroniques de puissance nécessaires à la commande des machines électriques 3 et 4. L'architecture peut aussi disposer d'un turbogénérateur 9 qui alimente entre autres le réseau de distribution 6 électrique et/ou un stockage d'énergie comme des systèmes de batteries

Les machines électriques 3 et 4 comprennent chacune un rotor 10, qui est relié à chacun des arbres basse pression 1 et haute pression 2 par une transmission, respectivement 11 et 12 pour la machine électrique 3 et 13 et 14 pour la machine électrique 4. Chacune des transmissions 11, 12, 13 et 14 comprend des éléments de transmission proprement dits comme des éléments de rotor, des arbres de renvoi, des engrenages, etc., de genres quelconques et aussi un accouplement unidirectionnel, respectivement 15, 16, 17 et 18, pouvant avantageusement être un élément passif comme un accouplement à roue libre. Les accouplements unidirectionnels 15 à 18 peuvent être montés directement sur les rotors 10 comme on l'a représenté ici, ou ailleurs sur les transmissions 11 à 14.

Il est essentiel de remarquer que les sens d'accouplements des roues libres 15 et 16 sont opposés, de même que ceux des roues libres 17 et 18, avec la conséquence que chacun des rotors 10 est accouplé à l'un ou l'autre des arbres basse pression 1 et haute pression 2, par l'une ou l'autre des transmissions 11 et 12, ou 13 et 14, et un seul d'entre eux, selon son sens de rotation.

Les différents modes de fonctionnement possibles, régis par le système de commande 7, vont maintenant être détaillés. Ces modes de fonctionnement sont choisis et réglés par le système de commande 7, qui agit sur les commandes des machines électriques 3 et 4 et le contrôle du moteur; les accouplements unidirectionnels 15 à 18 n'ont besoin d'aucun mécanisme de commande s'ils sont passifs, ce qui est un avantage important qui améliore la fiabilité de l'architecture.

Le mode de la figure 1 est un mode où les rotors 10 des deux machines électriques 3 et 4 tournent dans un sens de rotation qu'on appellera positif (R3+ et R4+) qui induit l'accouplement des roues libres 15 et 17. La mise en prise des deux rotors 10 et de l'arbre basse pression 1 s'effectue par les transmissions 11 et 13. De plus, le stockeur d'énergie 8 fournit la puissance électrique nécessaire aux machines électriques 3 et 4. Cette situation peut correspondre à un moteur 21 ou 22 éteint et au mode de taxiage ou d'entraînement au sol par une hélice ou une soufflante 23 (figure 7) au bout de l'arbre basse pression 1, ou à une fourniture de puissance additionnelle en transitoire ou en continu exclusivement sur l'arbre basse pression 1, qu'on peut instaurer pendant les différentes phases de vol. Dans ce mode de fonctionnement comme dans tous ceux où les machines électriques 3 et 4 (ou l'une d'elles seulement) travaillent en mode moteur, l'énergie électrique qui les alimente peut aussi provenir d'autres équipements qui leur sont reliés par le réseau de distribution 6, comme du turbogénérateur 9 ou de l'autre des moteurs 22 ou 21, par les machines électriques 3 et 4 de celui-ci. L'invention peut donc autoriser des modes de fonctionnement où un des moteurs fait démarrer ou accélérer l'autre, ce qui peut être particulièrement apprécié en cas de panne, le moteur éteint continuant alors à fonctionner par son arbre basse pression 1, qui entraîne ici encore une hélice ou la soufflante 23.

Le mode de la figure 2 est analogue à celui de la figure 1 et repose notamment sur la rotation des deux rotors 10 dans le sens positif R3+ et R4+, si ce n'est que les machines électriques 3 et 4 travaillent toutes deux en générateur de puissance électrique grâce à leurs électroniques de puissance. Ce mode permet de prélever de la puissance mécanique de l'arbre basse pression 1 pour fournir de l'énergie non propulsive, recharger le stockeur d'énergie 8 ou freiner l'arbre basse pression 1.

Le mode de réalisation de la figure 3 se distingue des précédents par une inversion des sens de rotation des rotors 10, c'est-à-dire qu'ils tournent dans les sens dits négatifs R3- et R4-. Les transmissions 11 et 13 menant à l'arbre basse pression 1 deviennent alors inactives, et réciproquement les transmissions 12 et 14 menant à l'arbre haute pression 2 transmettent de la puissance. Dans ce mode, la puissance est fournie par le stockeur d'énergie 8, ou le turbogénérateur 9, ou le second moteur 22 ou 21 à l'arbre haute pression 2 par les deux machines électriques 3 et 4. Cela peut être employé pour le démarrage du moteur 21 ou 22 ou une assistance électrique transitoire ou continue de l'arbre haute pression 2, qu'on peut instaurer pendant les différentes phases de vol. Ici aussi, la présence de deux machines électriques 3 et 4 qu'on peut commander indépendamment offre une plus grande liberté de conception.

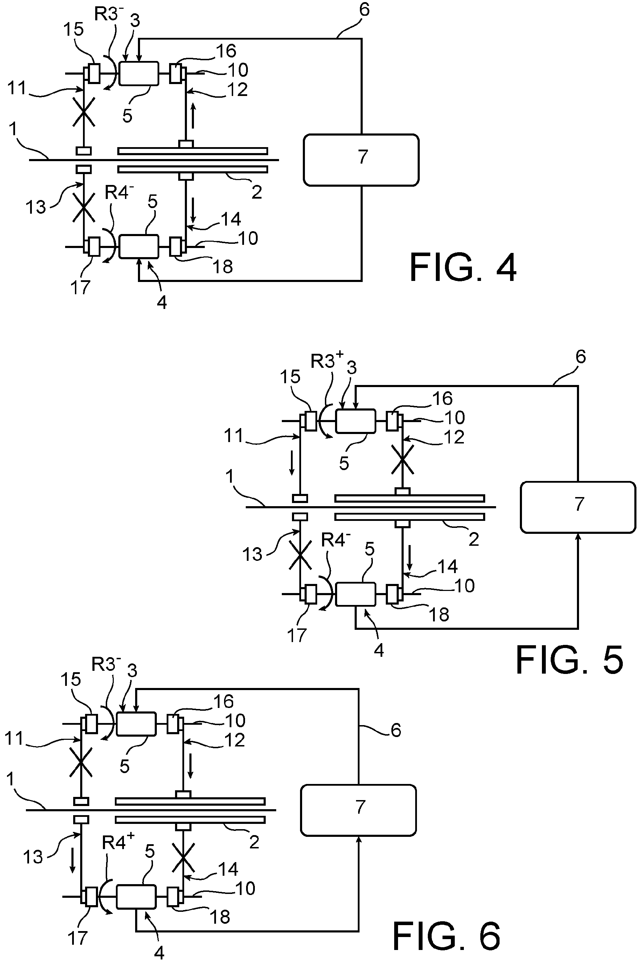

Dans le mode de réalisation de la figure 4, on retrouve les mêmes sens négatifs R3- et R4- de rotation des rotors 10, mais le sens de transmission de puissance est inversé, c'est-à-dire que les machines électriques 3 et 4 travaillent en mode générateur. Ce mode de fonctionnement pourrait être usuel pour fournir de l'énergie non propulsive, recharger le stockeur d'énergie 8 ou freiner l'arbre haute pression 2.

Dans le mode de fonctionnement de la figure 5, la rotation dans le sens positif R3+ de la première machine électrique 3 est associée au sens de rotation négatif R4-de la deuxième machine électrique 4. Il est alors possible de prélever de la puissance mécanique d'un des arbres et de fournir de la puissance mécanique à l'autre, avec un bilan de fourniture ou de ponction de la puissance électrique sur le réseau de distribution 6 pouvant être nul. Ici, la première machine électrique 3 contribue à entraîner l'arbre basse pression 1 par la transmission 11, et l'arbre haute pression 2 fait travailler la seconde machine électrique 4 en mode générateur d'électricité. Un tel mode de fonctionnement peut présenter de l'intérêt par exemple dans des phases transitoires du moteur 21 ou 22, en accélérant l'arbre basse pression 1 et décélérant l'arbre haute pression 2.

La figure 6 montre que le fonctionnement opposé est possible, la première machine électrique 3 fournissant de l'énergie à l'arbre haute pression 2, avec le sens de rotation négatif R3-, et l'arbre basse pression 1 faisant travailler la seconde machine électrique 4 en générateur au moyen de la rotation de son rotor 10 dans le sens positif R4+. Un tel mode de fonctionnement peut présenter de l'intérêt par exemple dans des phases transitoires du moteur 21 ou 22, en accélérant l'arbre haute pression 2 et décélérant l'arbre basse pression 1.

La commutation entre les différents modes de fonctionnement peut être facilitée, ainsi que le dimensionnement des machines électriques 3 et 4, si les rapports de réduction des transmissions 11 et 12, et 13 et 14 menant à chacun des rotors 10 sont inégaux, de façon à ce que les intervalles de régime de l'arbre basse pression 1 et de l'arbre haute pression 2 correspondent à des intervalles de vitesse proches sur le rotor 10 de chacune des machines électriques 3 et 4, ce qu'on peut obtenir par des amplificateurs ou des réducteurs de rotation (non représentés, pouvant consister en engrenages) sur les transmissions 11 à 14 de chacune des machines électriques 3 et 4.

## Revendications

1. Architecture d'un système propulsif hybride d'aéronef, comprenant un moteur (21, 22) comprenant au moins deux arbres (1, 2) tournant indépendamment l'un de l'autre, deux machines électriques réversibles (3, 4) reliées à un réseau de distribution (6), et un système de commande (7) des machines électriques, où:
- un rotor (10) de chaque machine électrique est relié à chacun des arbres (1, 2) du moteur par une transmission (11, 12, 13, 14) respective, les arbres ayant soit des sens de rotation inverses, soit des sens de rotation identiques, une des transmissions comportant alors une inversion de sens de rotation,
- chacune des transmissions comprend un accouplement débrayable (15, 16, 17, 18), les accouplements débrayables sont des embrayages unidirectionnels passifs, et les embrayages unidirectionnels de chaque machine électrique mettent le rotor (10) de la machine électrique en accouplement avec les arbres (1, 2) pour des sens opposés de rotation du rotor (10) de la machine électrique, où:
- le système de commande (7) des machines électriques permet :
- une commande des machines électriques en mode moteur et en mode générateur dans les deux sens de rotation de leur rotor,
- un entraînement d'au moins un des arbres par les deux machines électriques (3, 4), et aussi une génération d'électricité à partir d'un des deux arbres par la première machine électrique, simultanément à un entraînement du second des deux arbres par la seconde machine électrique.

2. Architecture d'un système propulsif hybride d'aéronef selon la revendication 1, où le système de commande (7) permet une génération d'électricité à partir d'un des arbres, par une ou deux machines électriques (3, 4).

3. Architecture d'un système propulsif hybride d'aéronef selon l'une quelconque des revendications 1 ou 2, où les transmissions comprennent des rapports de réduction de vitesse de rotation inégaux entre le rotor d'au moins une des machines et les arbres du moteur.

4. Aéronef, comprenant une pluralité de moteurs (21, 22) chacun pourvus de l'architecture selon l'une quelconque des revendications précédentes, où les machines électriques de tous les moteurs sont reliés à un dispositif (8, 9) de fourniture d'énergie.

5. Aéronef selon la revendication 4, où le système de commande (7) permet un entraînement d'un premier des moteurs par un autre des moteurs via les machines électriques, les machines électriques du premier des moteurs fonctionnant en mode moteur et les machines électriques du second des moteurs fonctionnant en mode générateur.

6. Aéronef selon l'une quelconque des revendications 4 ou 5, l'aéronef comprenant un dispositif de fourniture d'énergie, relié aux machines électriques, et qui comprend un turbogénérateur (9) et/ou un stockeur d'énergie (8).

## Patentansprüche

1. Architektur eines Hybridantriebssystems für ein Luftfahrzeug, das einen Motor (21, 22) mit mindestens zwei unabhängig voneinander drehenden Wellen (1, 2), zwei mit einem Versorgungsnetz (6) verbundene reversible elektrische Maschinen (3, 4) und ein Steuerungssystem (7) für die elektrischen Maschinen aufweist, wobei:
- ein Rotor (10) jeder elektrischen Maschine mit jeder der Wellen (1, 2) des Motors durch ein jeweiliges Getriebe (11, 12, 13, 14) verbunden ist, wobei die Wellen entweder umgekehrte Drehrichtungen oder gleiche Drehrichtungen aufweisen, wobei bei gleicher Drehrichtung eines der Getriebe eine Umkehrung der Drehrichtung aufweist, und
- jedes der Getriebe eine ausrückbare Kupplung (15, 16, 17, 18) aufweist, wobei die ausrückbaren Kupplungen passive Einwegkupplungen darstellen und die Einwegkupplungen jeder elektrischen Maschine bei entgegengesetzten Drehrichtungen des Rotors (10) der elektrischen Maschine den Rotor (10) der elektrischen Maschine mit den Wellen (1, 2) in Eingriff bringen, wobei:
- das Steuerungssystem (7) für die elektrischen Maschinen folgendes ermöglicht:
- eine Steuerung der elektrischen Maschinen im Motor- und im Generatormodus in beiden Drehrichtungen ihrer Rotoren, und
- einen Antrieb von zumindest einer der Wellen durch die beiden elektrischen Maschinen (3, 4) sowie eine Stromerzeugung durch die erste elektrische Maschine mittels einer der beiden Wellen, während gleichzeitig die zweite elektrische Maschine die zweite der beiden Wellen antreibt.

2. Architektur eines Hybridantriebssystems eines Luftfahrzeugs nach Anspruch 1, wobei das Steuerungssystem (7) eine Stromerzeugung mittels einer der Wellen durch eine oder zwei elektrische Maschinen (3, 4) ermöglicht.

3. Architektur eines Hybridantriebssystems eines Luftfahrzeugs nach einem der Ansprüche 1 oder 2, wobei die Getriebe ungleiche Drehzahluntersetzungsverhältnisse zwischen dem Rotor mindestens einer der Maschinen und den Motorwellen aufweisen.

4. Luftfahrzeug mit einer Mehrzahl an Triebwerken (21, 22), die jeweils mit der Architektur nach einem der vorherigen Ansprüche versehen sind, wobei die elektrischen Maschinen aller Triebwerke mit einer Energieversorgungsvorrichtung (8, 9) verbunden sind.

5. Luftfahrzeug nach Anspruch 4, wobei das Steuerungssystem (7) einen Antrieb eines ersten der Triebwerke durch ein anderes der Triebwerke mittels der elektrischen Maschinen ermöglicht, wobei die elektrischen Maschinen des ersten der Triebwerke im Motormodus arbeiten und die elektrischen Maschinen des anderen der Triebwerke im Generatormodus arbeiten.

6. Luftfahrzeug nach einem der Ansprüche 4 oder 5, wobei das Luftfahrzeug eine mit den elektrischen Maschinen verbundene Energieversorgungsvorrichtung aufweist, die einen Turbogenerator (9) und/oder einen Energiespeicher (8) umfasst.

## Claims

1. An architecture of a hybrid propulsive system for an aircraft, comprising an engine (21, 22) comprising at least two shafts (1, 2) rotating independently of one another, two reversible electric machines (3, 4) connected to a distribution network (6), and a system for controlling (7) the electric machines, wherein :
- a rotor (10) of each electric machine is connected to each of the engine shafts (1, 2) by a respective transmission (11, 12, 13, 14), the shafts having either reversed directions of rotation, or identical directions of rotation, one of the transmissions then including a direction of rotation reversed,
- each of the transmissions comprises a disengaging coupling (15, 16, 17, 18), the disengaging couplings are passive one-way clutches, and the one-way clutches of each electric machine couple the rotor (10) of the electric machine with the shafts (1, 2) for opposite rotational directions of the rotor (10) of the electric machine, wherein
- the system for controlling (7) the electric machines enables:
- the electric machines to be controlled in a motor mode and in a generator mode in both rotational directions of their rotor,
- at least one of the shafts to be driven by both electric machines (3, 4), and also electricity to be generated from one of both shafts by the first electric machine, simultaneously to the second of both shafts being driven by the second electric machine.

2. The architecture of a hybrid propulsive system for an aircraft according to claim 1, wherein the control system (7) enables electricity to be generated from one of the shafts, by one or two electric machines (3, 4).

3. The architecture of a hybrid propulsive system for an aircraft according to any of claims 1 and 2, wherein the transmissions comprise unequal rotating speed reducing ratios between the rotor of at least one of the machines and the shafts of the engine.

4. An aircraft, comprising a plurality of engines (21, 22) each being provided with the architecture according to any of the previous claims, wherein the electric machines of all the engines are connected to an energy supplying device (8, 9).

5. The aircraft according to claim 4, wherein the control system (7) enables a first one of the engines to be driven by another one of the engines via the electric machines, the electric machines of the first one of the engines operating in engine mode and the electric machines of the second one of the engines operating in generator mode.

6. The aircraft according to any of claims 4 and 5, the aircraft comprising an energy supplying device, connected to the electric machines, and which comprises a turbogenerator (9) and/or an energy storing device (8).
